Europäisches Patentamt

European Patent Office

Office européen des brevets

(19)

(11) **EP 0 497 668 B1**

(12) **FASCICULE DE BREVET EUROPEEN**

(45) Date de publication et mention
de la délivrance du brevet:
**12.06.1996 Bulletin 1996/24**

(51) Int Cl.⁶: **H04Q 11/00**, H04J 14/02,
H04J 14/08

(21) Numéro de dépôt: **92400187.8**

(22) Date de dépôt: **24.01.1992**

(54) **Multiplexeur temporel photonique, et démultiplexeur temporel photonique**

Optischer Zeitmultiplexer und optischer Zeitdemultiplexer

An optical time multiplexer and an optical time demultiplexer

(84) Etats contractants désignés:
**BE CH DE ES GB IT LI NL SE**

(30) Priorité: **29.01.1991 FR 9100979**

(43) Date de publication de la demande:
**05.08.1992 Bulletin 1992/32**

(73) Titulaire: **ALCATEL CIT**
**F-75008 Paris (FR)**

(72) Inventeurs:
• **Jacob, Jean-Baptiste**
**F-22700 Perros-Guirec (FR)**
• **Le Roy, Guy**
**F-22300 Lannion (FR)**
• **Gabriagues, Jean-Michel**
**F-91530 le Val Saint-Germain (FR)**

(74) Mandataire: **Sciaux, Edmond et al**
**c/o SOSPI,**
**14-16 rue de la Baume**
**F-75008 Paris (FR)**

(56) Documents cités:
**EP-A- 0 282 071**

• **PATENT ABSTRACTS OF JAPAN, vol. 10, no.
228 (E-426)[2284], 8 août 1986; & JP-A-61 61 596
(NTT) 29-03-1986**
• **PATENT ABSTRACTS OF JAPAN, vol. 10, no.
221 (E-424)[2277], 2 août 1986; & JP-A-61 56 594
(NTT) 22-03-1986**
• **CONFERENCE RECORD, IEEE GLOBAL
TELECOMMUNICATIONS CONFERENCE &
EXHIBITION, Hollywood, FL, 28 novembre - 1
décembre 1988, vol. 2, pages 933-937; S. SUZUKI
et al.: "Photonic wavelength-division and
time-division hybrid switching networks for
large line-capacity broadband switching
systems"**
• **PROCEEDINGS OF THE NATIONAL
COMMUNICATIONS FORUM, Rosemont, III,
28-30 septembre 1987, vol. XXXXI, livre II, pages
1282-1295; T. YASUI: "Overview of photonic
switching systems technology"**
• **ELECTRONICS LETTERS, vol. 26, no. 22, 25
octobre 1990, pages 1895-1896, Stevenage, GB;
M. TSUKADA et al.: "40 Gbit/s optial
time-division cell multiplexer for a photonic ATM
switch"**

## Description

L'invention concerne un multiplexeur temporel photonique et un démultiplexeur temporel photonique, applicables notamment dans les réseaux de télécommunications utilisant la technique de multiplexage temporel asynchrone. Selon cette technique, des données binaires pouvant représenter notamment des communications téléphoniques, sont transmises sous la forme de cellules comportant chacune un nombre de bits fixé. Les multiplexeurs et les démultiplexeurs temporels de type connu sont réalisés au moyen de composants électroniques. L'apparition de composants photoniques permet d'envisager la réalisation de multiplexeurs et de démultiplexeurs temporels photoniques. L'article de M. Tsukada et al. paru dans Electronics Letters, vol.26, no. 22, pages 1895-1896, du 25 Octobre 1990, intitulé "40 Gbit/s optical time-division cell multiplexer for a photonic ATM switch", décrit un tel dispositif de multiplexage temporel photonique. Les composants photoniques ont une plus grande rapidité que les composants électroniques, et ils permettent un multiplexage spectral.

Le but de l'invention est de proposer un multiplexeur et un démultiplexeur temporels photoniques dont la structure soit optimisée pour tirer partie des performances des composants photoniques.

Un premier objet de l'invention est un multiplexeur temporel photonique, conformément aux caractéristiques de la revendication 1.

Un second objet de l'invention est un démultiplexeur temporel photonique, conformément aux caractéristiques de la revendication 6.

Le multiplexeur et le démultiplexeur ainsi caractérisés ont un coût réduit par le fait que les moyens pour multiplier, ou diviser, le débit initial d'un bloc de bits plus petit qu'une cellule comporte moins de composants que des moyens pour multiplier, ou diviser, le débit initial d'une cellule complète. Les moyens pour découper une cellule en blocs et les moyens pour concaténer les blocs constituant une cellule comportent un nombre de composants supplémentaires qui est croissant avec le nombre de blocs constituant chaque cellule, mais un compromis avantageux peut être trouvé sur le nombre de blocs par cellule, et ce compromis conduit à un dispositif comportant beaucoup moins de composants que si les moyens pour multiplier, ou diviser, le débit traitaient une cellule complète.

L'invention sera mieux comprise et d'autres détails apparattront à l'aide de la description ci-dessous et des figures l'accompagnant.

- les figures 1, 2, 3 représentent respectivement trois étages d'un exemple de réalisation du multiplexeur selon l'invention;
- les figures 4 et 5 représentent respectivement deux étages d'un exemple de réalisation du démultiplexeur selon l'invention.

Dans cet exemple de réalisation, seize suites de cellules sont à multiplexer temporellement sur une fibre optique unique, en mutlipliant par quatre le débit initial du débit des cellules et en multiplexant spectralement les cellules par quatre longueurs d'onde, autrement dit quatre couleurs. Cet exemple de réalisation comporte : un premier étage 35 ayant essentiellement pour fonction de multiplexer spectralement des cellules puis de multiplier le débit; un deuxième étage 37 ayant essentiellement pour fonction de réaliser un multiplexage temporel en recevant des cellules multlplexées par seize couleurs sur une seule fibre, en les répartissant sur quatre fibres optiques distinctes, sans multiplexage spectral; et un troisième étage 38 ayant pour fonction de réaliser un nouveau multiplexage spectral, en recevant des cellules multiplexées temporellement sur quatre fibres optiques et en les multiplexant à la fois temporellement et spectralement sur une fibre optique unique. Le troisième étage 38 est optionnel, il n'a pas lieu d'être si on souhaite un multiplexage temporel pur, tel que celui-ci réalisé à la sortie du deuxième étage 37.

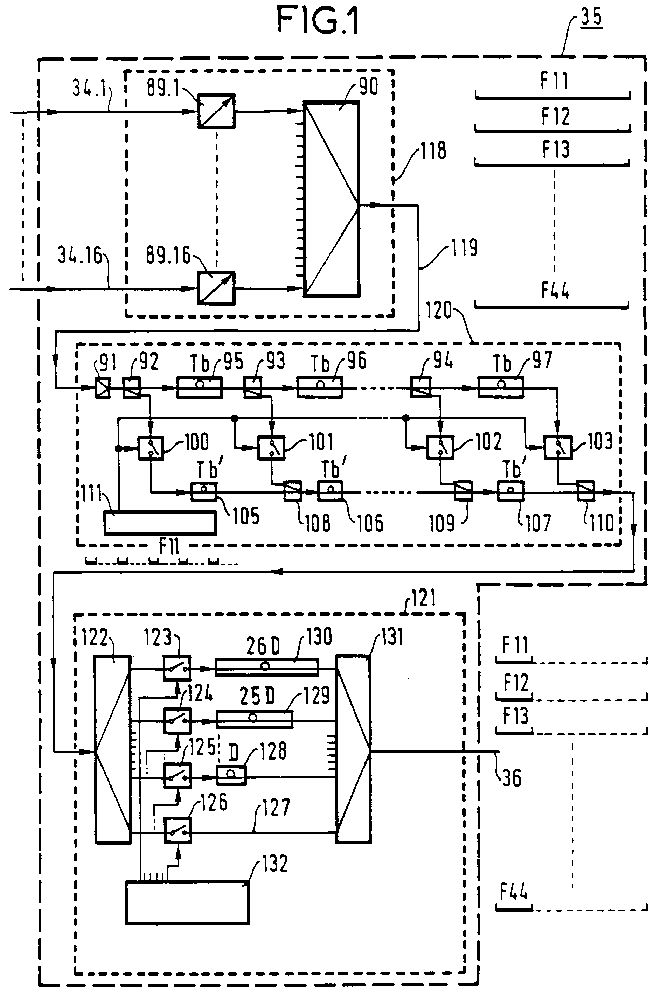

La figure 1 représente le schéma synoptique du premier étage 35 de cet exemple de réalisation. Il reçoit sur seize fibres optiques 34.1,..., 34.16, des cellules de 424 bits avec un débit de 622 Mb/s. L'étage 35 comporte : une partie 118 réalisant un multiplexage spectral, par seize couleurs différentes; une partie 120 réalisant une multiplication du débit en travaillant par blocs de seize bits; et une partie 121 réalisant une concaténation des blocs de 16 bits dont le débit a été multiplié par la partie 120. La sortie de la partie 121 constitue la sortie de l'étage 35 et fournit sur une fibre optique unique, 36, des cellules multiplexées spectralement sur seize couleurs ayant un débit de 2,488 Gb/s. Deux cellules consécutives ayant la même couleur sont séparées par un intervalle libre dont la durée est égale approximativement à trois fois la durée d'une cellule ayant le débit de 2, 488 Gb/s.

La partie 118 comporte :

- seize convertisseurs de longueur d'onde 89.1,..., 89.16, ayant seize entrées constituant les seize entrées du multiplexeur recevant des cellules par des fibres 34.1 à 34.16;
- un combineur 90 ayant seize entrées reliées respectivent à seize sorties des convertisseurs de longueur d'onde 89.1,...,89.16, et ayant une sortie reliée par une fibre optique 119 à une entrée de l'étage 120.

Les cellules fournies par les fibres 34.1,...,34.16 sont synchrones entre elles, par conséquent la partie 118 fournit sur la fibre 119 seize cellules synchrones superposées, discriminables par leur longueur d'onde : F11, F12, F13,...,F44.

La partie 120 opère par blocs de 16 bits au lieu d'opérer par cellules de 424 bits, ce qui conduit à une importante réduction du nombre des composants nécessaires pour réaliser cet étage de changement de débit. Chaque cellule de 424 bits est découpée en vingt sept blocs de 16 bits, le vingt septième bloc ne contenant que 8 bits utiles. En fait, les parties 120 et 121 traitent simultanément seize blocs, de seize couleurs différentes les unes des autres, car l'étage 118 fait un multiplexage spectral sur seize couleurs différentes.

La partie 120 comporte :

- un amplificateur optique 91;
- un jeu de 16 lignes à retard 95, 96,..., 97 procurant chacune un retard égal à une période de bit, Tb, à 622 Mb/s;
- seize coupleurs à trois accès, 92, 93,...,94;
- un second jeu de lignes à retard 105, 106,..., 107 procurant chacune un retard égal à une période de bit, T'b, à 2,488 Gb/s;
- seize coupleurs à trois entrées, 108,..., 109, 110;
- seize portes optiques 100, 101,..., 102, 103;
- un dispositif de commande 111 commandant en parallèle toutes les portes optiques 100 à 103, avec une période égale à la durée de 16 bits au débit de 622 Mb/s.

Les blocs de 16 bits fournis par la sortie de la partie 120 sont séparés par des intervalles de temps où il n'y a aucun bit, par conséquent chaque cellule n'est plus une suite continue de 424 bits.

La partie 121 a pour rôle de rétablir la continuité des bits à l'intérieur de chaque cellule, en réalisant une concaténation des blocs de 16 bits. La partie 121 comporte :

- un diffuseur 122;
- 27 portes optiques 123, 124, ..., 126;
- un dispositif de commande 127 commandant électriquement les portes optiques 123 à 126, indépendamment des unes des autres;
- 26 lignes à retard fixe, 127, 128,..., 129, 130 procurant des retards respectivement égaux à 0,D, 2.D, 3.D, ..., 25.D, 26.D, où D est la différence de durée entre un bloc de 16 bits au débit de 622 Mb/s et un bloc au débit de 2,488 Gb/s;
- un combineur 131, dont la sortie constitue la sortie de la partie 121 et de l'étage 35;
- un dispositif de commande 132.

Le diffuseur 122 possède 27 sorties reliées respectivement à 27 entrées du combineur 131 par l'intermédiaire des 27 portes 123 à 126, en série avec l'une des lignes à retard 127 à 130.

Pour chaque cellule, le premier bloc doit être retardé d'un retard égal à 26.D, le deuxième bloc doit être retardé d'un retard égal à 25.D, etc. Le dispositif de commande 132 commande successivement les portes 123 à 126 pour laisser passer le premier bloc dans la ligne à retard 130, le second bloc dans la ligne à retard 129, etc. Le 27ième bloc, incomplet, étant transmis directement par la porte 126 jusqu'au combineur 131. A la sortie du combineur 131 chaque cellule est reformée d'une suite continue de 424 bits. Chaque cellule a une couleur différente parmi 16, et a un débit de 2,488 Gb/s.

Le multiplexage spectral sur 16 couleurs permet d'utiliser très efficacement les parties 120 et 121, mais il ne convient pas en aval, il faut revenir à un multiplexage temporel. L'étage 37 a pour fonction de multiplexer temporellement ces cellules sur 4 fibres optiques pour constituer 4 multiplex à 2,488 Gb/s, non multiplexés spectralement.

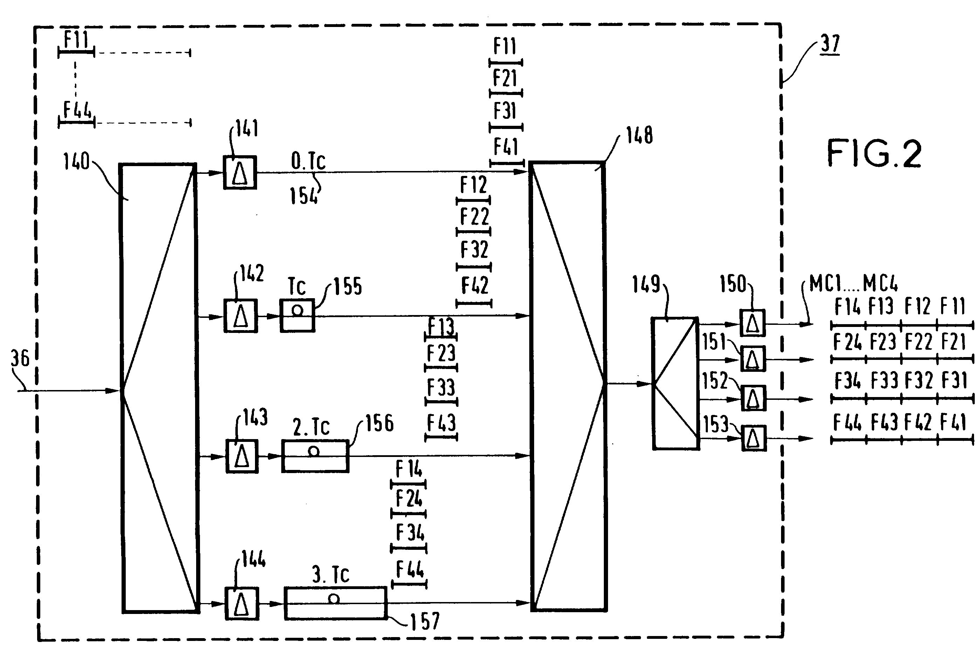

La figure 2 représente le schéma synoptique d'un exemple de réalisation de l'étage 37. Il reçoit des cellules fournies par la fibre 34 sous la forme de 16 cellules en synchronisme, multiplexées par les 16 couleurs différentes F11, F12, F13, F14, F21,..., F41, F42, F43, F44. Chaque paquet de seize cellules est suivi d'un intervalle vide ayant une durée égale approximativement à trois périodes de cellule, au débit de 2,488 Gb/s.

Cet exemple de réalisation comporte :

- un diffuseur 140;
- un filtre périodique 141 laissant passer les couleurs F11, F21, F31, F41;
- un filtre périodique 142 laissant passer les couleurs F12, F22, F32, F42;
- un filtre périodique 143 laissant passer les couleurs F13, F23, F33, F43;
- un filtre périodique 144 laissant passer les couleurs F14, F24, F34, F44;
- quatre lignes à retard 154 à 157 procurant des retards égaux à 0,Tc, 2.Tc, 3.Tc, où Tc est la période de cellule au débit de 2,488 Gb/s;
- un combineur 148;
- un diffuseur 149;
- un filtre passe-bande 150 laissant passer les couleurs F14, F13, F12, F11;
- un filtre passe-bande 151 laissant passer les couleurs F24, F23, F22, F21;
- un filtre passe-bande 152 laissant passer les couleurs F34, F33, F32, F31;
- un filtre passe-bande 153 laissant passer les couleurs F44, F43, F42, F41.

Le diffuseur 140 comporte 4 sorties qui sont reliées respectivement à 4 entrées du combineur 148 par 4 voies constituées respectivement : du filtre 141; du filtre 142 en série avec la ligne à retard 155; du filtre 143 en série avec la ligne à retard 156; et du filtre 144 en série avec la ligne à retard 157. La sortie du combineur 148 est reliée à l'entrée du diffuseur 149. Le diffuseur 149 possède quatre sorties qui sont reliées respectivement à quatre sorties de l'étage 37 respectivement par les filtres 150 à 153, pour fournir les multiplex MC1, ..., MC4.

Les quatre voies qui relient le diffuseur 140 au combineur 148 ont pour fonction de décaler les cellules en quatre paquets de quatre cellules synchrones. La première voie transmet sans retard les cellules de couleur F11, F21, F31, F41. La deuxième voie transmet avec un retard égal une période de cellule, les cellules ayant les couleurs F12, F22, F32, F42. La troisième voie transmet, avec un retard égal à deux périodes de cellule, les cellules ayant les couleurs F13, F23, F33, F43. La quatrième voie transmet avec un retard égal à trois périodes de cellule, les cellules ayant les couleurs F14, F24, F34, F44.

Il apparaît que les cellules de couleur F11, F12, F13, F14 sont devenues successives et jointives dans le temps, il reste à les acheminer sur un multiplex séparé, par rapport aux cellules correspondant aux douze autres couleurs. Le diffuseur 149 a pour fonction de diffuser toutes les cellules de 16 couleurs, vers les quatre filtres 150 à 153 qui les répartissent en quatre multiplex MC1,...,MC4 physiquement séparés sur quatre fibres optiques. Le filtre 150 laisse passer les quatre cellules successives ayant les couleurs F14, F13, F12, F11. Simultanément, le filtre 151 laisse passer les quatre cellules successives ayant les couleurs F24, F23, F22, F21. Simultanément, le filtre 152 laisse passer les quatre cellules successives ayant les couleurs F34, F33, F32, F31. Simultanément, le filtre 153 laisse passer les quatre cellules successives ayant les couleurs F44, F43, F42, F41.

A la sortie de l'étage 37, les cellules gardent leurs diverses couleurs mais celles-ci ne constituent plus un multiplex spectral. Chaque cellule peut-être discriminée par l'intervalle temporel et par le multiplex qui la transporte.

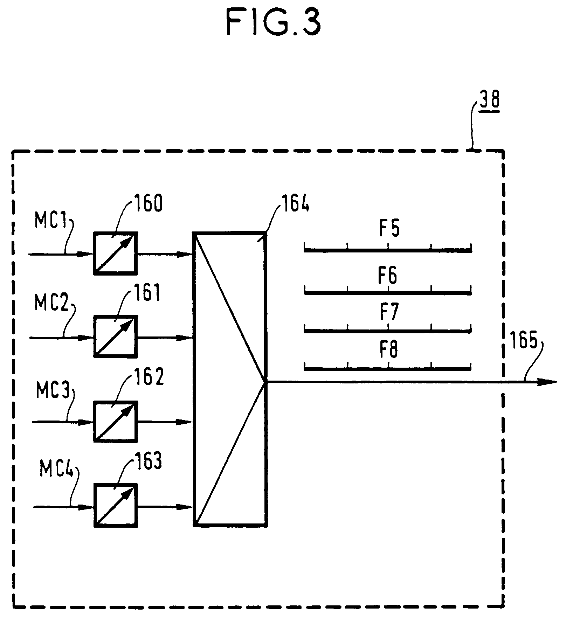

La figure 3 représente le schéma synoptique du troisième étage, 38, de cet exemple de réalisation. Il comporte :

- quatre convertisseurs de longueur d'onde, 160 à 163, ayant quatre entrées recevant respectivement les quatre multiplex temporels MC1 à MC4;
- un combineur 164 ayant quatre entrées reliées respectivement à quatre sorties des convertisseurs 160 à 163, et ayant une sortie reliée à une fibre optique 165 constituant la sortie de l'étage 38 et la sortie du démultiplexeur.

Les quatre multiplex MC1, MC2, MC3, MC4 transportent des cellules multiplexées temporellement et ayant des couleurs quelconques ne constituant pas un multiplexage temporel. Les convertisseurs 160 à 163 ont pour fonction d'attribuer quatre couleurs déterminées et différentes les unes des autres, F5, F6, F7, F8, respectivement aux cellules du multiplex temporel MC1, aux cellules du multiplex temporel MC2, aux cellules du multiplex temporel MC3, et aux cellules du multiplex temporel MC4. Le combineur 164 superpose sur une même fibre 165 les cellules colorées par les convertisseurs 160 à 163. Le multiplex porté par la fibre 165 est donc un multiplex temporel unique qui est aussi un multiplex spectral.

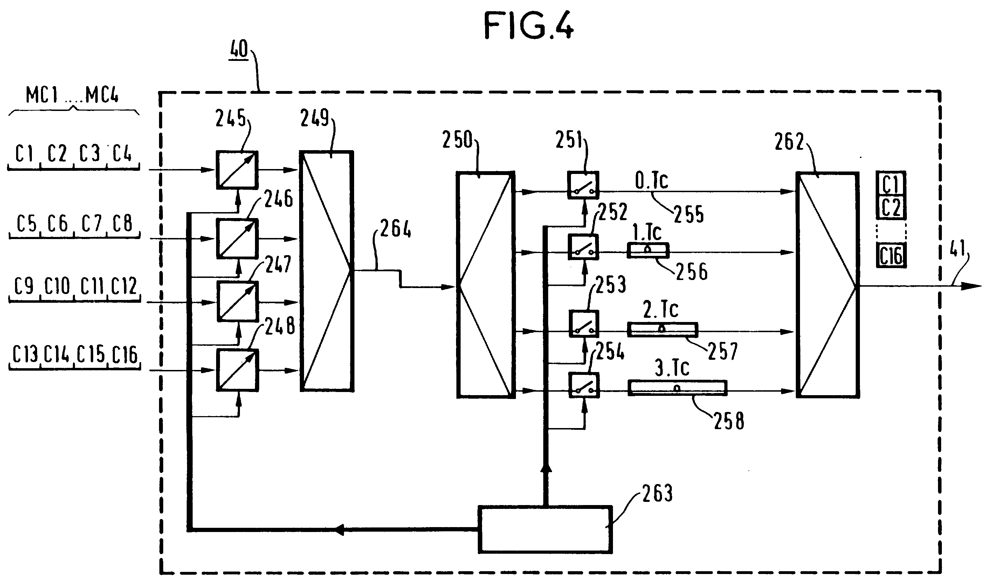

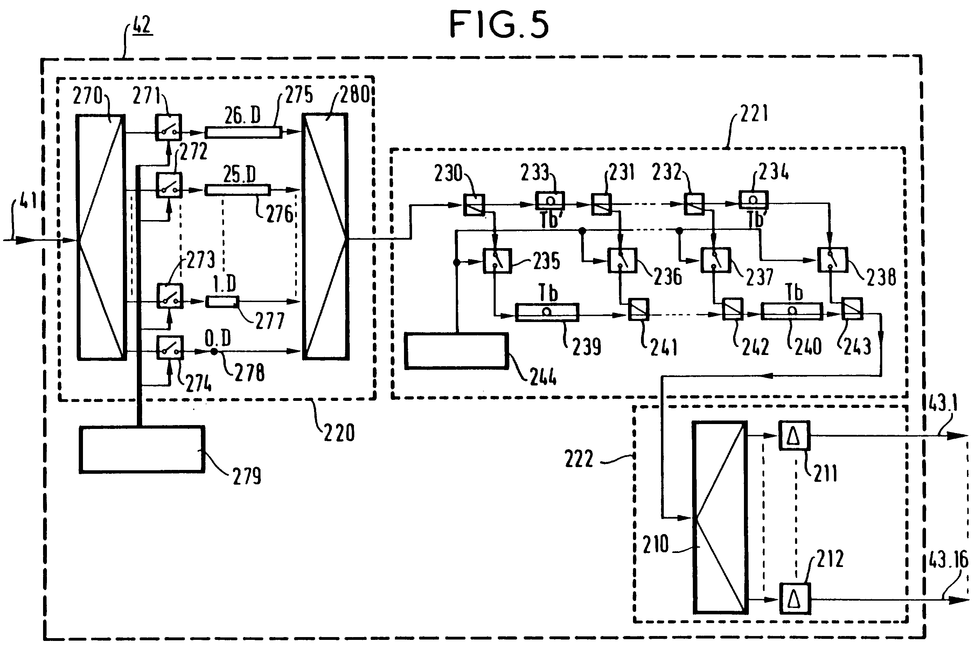

Les figure 4 et 5 représentent un exemple de réalisation d'un démultiplexeur temporel photonique, selon l'invention, pour démultiplexer quatre multiplex temporels MC1,...,MC4 portant chacun une suite de cellules avec un débit de 2,488 Gb/s et ayant éventuellement une couleur quelconque. Considérons par exemple un intervalle de temps pendant lequel quatre cellules arrivent sur chacun de ces multiplex. Les cellules C1, C2, C3, C4 arrivent sur le multiplex C1. Les cellules C5, C6, C7, C8 arrivent sur le multiplex M2. Les cellules C9, C10, C11, C12 arrivent sur le multiplex MC3. Les cellules C13, C14, C15, C16 arrivent sur le multiplex MC4.

La figure 4 représente le schéma synoptique d'un étage 40 de cet exemple de réalisation, réalisant un démultiplexage temporel et un multiplexage spectral. Il reçoit, par les quatre multiplex MC1,...,MC4, des cellules avec des couleurs quelconques et un débit de 2,488 Gb/s. Il restitue, sur une fibre optique unique, 41, des paquets de seize cellules synchrones, au moyen d'un multiplexage spectral sur seize couleurs différentes, avec un débit de 2,488 Gb/s. Deux paquets successifs de seize cellules sont séparés par un intervalle vide, de durée égale à trois périodes de cellule. Il comprend :

- quatre convertisseurs de longueur d'onde, 245 à 248, ayant quatre entrées reliées respectivement aux quatre multiplex MC1,..., MC4;
- un combineur 249 ayant quatre entrées reliées respectivement à quatre sorties des convertisseurs 245 à 248;
- un diffuseur 250 ayant une entrée reliée à la sortie du combineur 249 et ayant quatre sorties;
- quatre portes optiques, 251 à 254, commandables électriquement;
- un jeu de quatre lignes à retard, 255 à 257, procurant des retards respectivement égaux à 0, Tc, 2Tc, 3Tc; où Tc est la période de cellule à 2,488 Gb/s;
- un combineur 262 ayant quatre entrées, et ayant une sortie constituant la sortie de l'étage 40, reliée à la fibre 41;
- un dispositif de commande 263 qui commande chacune des portes 251 à 254 indépendamment, et qui commande chacun des convertisseurs 245 à 240 indépendamment.

Chacune des sorties du diffuseur 250 est reliée respectivement à une entrée du combineur 262 par l'intermédiaire d'une porte, 251, ..., 254 et d'une ligne à retard, 255,..., 258.

Considérons le démultiplexage temporel :

- d'un paquet de quatre cellules successives, C1, C2, C3, C4, arrivant sur le multiplex MC1;
- d'un paquet de quatre cellules successives C5, C6, C7, C8, arrivant sur le multiplex MC2;
- d'un paquet de quatre cellules successives C9, C10, C11, C12, arrivant sur le multiplex MC3;
- et d'un paquet de quatre cellules successives C13, C14, C15, C16, arrivant sur le multiplex MC4;

ces quatre paquets arrivant simultanément.

Les quatre cellules de chaque paquet sont colorées successivement par l'un des convertisseurs ; 245 à 248, de telle sorte que seize couleurs différentes sont attribués aux cellules C1 à C16. L'attribution des couleurs est périodique avec une période égale à quatre périodes de cellule.

Les quatre cellules de chaque paquet sont retardées respectivement d'un retard égal à 0,Tc, 2.Tc, 3.Tc de façon à les rendre synchrones entre elles. Pour cela, chaque porte 251 à 252 est ouverte successivement, pendant la durée d'une cellule, et périodiquement avec une période égale à quatre périodes Tc de cellule. Ainsi les cellules C4, C8, C12, C16, par exemple, sont transmises simultanément par la porte 254 et sont retardées simultanément par la ligne à retard 258, d'un retard égal à 3Tc. Elles arrivent au combineur 262 en même temps que les cellules C1, C5, C9, C13, par exemple, qui sont transmises simultanément par la porte 251 et qui sont transmises avec un retard nul par la ligne 255.

La figure 5 représente le schéma synoptique d'un étage 42 de changement de débit, de cet exemple de réalisation. Il opère un changement de débit par blocs de 16 bits, au lieu d'opérer cellule par cellule, afin de simplifier la réalisation. Cependant, il est nécessaire de découper préalablement les cellules en 28 blocs de 16 bits. L'étage 42 comporte donc : une première partie, 220, découpant chaque cellule en 27 blocs de 16 bits; une seconde partie, 221, réalisant le changement de débit bloc par bloc; et une troisième partie, 222, comportant, un diffuseur 210 et seize filtres 211,...,212 pour démultiplexer spectralement chaque paquet de seize cellules en les répartissant sur seize fibres optiques de sortie, 43.1 à 43.16.

La première partie 220 comporte :

- un diffuseur 270 ayant une entrée reliée à la fibre optique 41 fournissant des cellules avec un débit de 2,488 Gb/s, et ayant 27 sorties;
- un combineur 280 ayant une sortie constituant la sortie de la première partie 220, qui est reliée à une entrée de la seconde partie 271, et ayant 27 entrées;
- vingt sept portes optiques commandables électriquement, 271, 272, ..., 273, 274;
- vingt sept lignes à retard, 275,..., 276, 277, 278 procurant des retards respectivement égaux à 26D,..., D, 0, où D est la différence de la durée d'un bloc de 16 bits au débit de 622 Mb/s, par rapport à sa durée initiale au débit de 2,488 Gb/s;
- un dispositif de commande 279 possédant des sorties reliées respectivement à des entrées de commande des portes optiques 271,..., 274.

Vingt sept sorties du diffuseur 270 sont reliées respectivemnt à l'une des vingt sept entrées du combineur 280 par une voie comprenant en série une porte optique et une ligne à retard, dont l'une a un retard nul.

Le dispositif de commande 279 commande successivement l'ouverture des portes 271, ..., 274, pour transmettre successivement les 28 blocs de 16 bits constituant chaque cellule. Un premier bloc est transmis sans retard, par la porte 274 et la liaison directe. Un deuxième bloc est transmis par la porte 273 pour être stocké et retardé dans la ligne à retard 277 procurant un retard correspondant à un bloc de 16 bits. Un troisième bloc est transis par une porte, non représentée dans une ligne à retard, non représentée, procurant un retard correspondant à deux blocs de 16 bits, etc. Le vingt huitième bloc est transmis par la porte 271 pour être stocké dans la ligne à retard 275 pendant une durée correspondant à 26 blocs de 16 bits. Ainsi la première partie 220 transmet des blocs de 16 bits à la seconde partie 221, en les espaçant d'un retard correspondant à la durée de 16 bits, ce qui permet de traiter chaque bloc dans la partie 221 en disposant d'un temps libre égal à la durée d'un bloc de 16 bits.

La partie 221 a une structure et un fonctionnement analogues à ceux de la partie 120 décrite précédemment et représentée sur la figure 1. Elle réalise un changement de débit de 2,488 Gb/s à 622 Mb/s, par exemple. Elle comporte :

- une première série de 16 lignes à retard 233,...,234 procurant chacune un retard égale à une période de bit, Tb′, à 2,488 Gb/s;
- seize coupleurs à trois accès, 230, 231, ..., 232 intercalés dans la première série de lignes à retard;
- une seconde série de 16 lignes à retard 239,...,240 procurant chacune un retard égal à une période de bit, Tb, à 622 Mb/s;
- seize coupleurs à trois accès, 241, 242,..., 243, intercalés dans la seconde série de lignes à retard;
- seize portes optiques 235,....,238 reliant les coupleurs intercalés dans la première série de lignes à retard, aux coupleurs intercalés dans la seconde série de lignes à retard;
- un dispositif de commande 244 commandant en parallèle toutes les portes 235,....,238, avec une période égale à la durée de 16 bits au débit de 2, 488 Gb/s.

La partie 222 démultiplexe spectralement les cellules et fournit donc seize cellules synchrones, au débit de 622 M b/s respectivement sur les seize fibres de sortie du démultiplexeur 43.1 à 42.16.

La portée de l'invention n'est pas limitée aux nombres de signaux et aux débits donnés ci-dessus à titre d'exemple. L'Homme de l'Art peut adapter les étages de changement de débit pour multiplier ou diviser le débit par un facteur quelconque, entier ou non entier.

## Revendications

1. Multiplexeur temporel photonique, pour multiplexer temporellement des données binaires reçues sous la forme de M suites de cellules synchrones, multiplexées spectralement, chaque cellule ayant un nombre de bits fixé, les cellules de chaque suite étant séparées par des intervalles libres, caractérisé en ce qu'il comporte :

- des moyens (120), communs pour les M suites, pour multiplier par un nombre K, supérieur à 1, le débit initial d'un bloc de B bits d'une cellule, B étant un nombre fixé supérieur à 1 et inférieur au nombre de bits d'une cellule, et chaque cellule étant découpée en une suite de blocs de B bits;

- des moyens (121), communs pour les M suites, pour concaténer les blocs constituant chaque cellule, situés en aval des moyens (120) pour multiplier le débit de chaque bloc;

- des moyens (37, 38) pour multiplexer temporellement des cellules restituées par les moyens pour concaténer;
  et en ce que les moyens (120) pour multiplier par K le débit d'un bloc de B bits, comportent :

- une première série de B lignes à retard (95,..., 97) chacune procurant un retard égal à la durée d'un bit d'une cellule, au débit initial; une entrée de cette première série constituant une entrée des moyens pour multiplier le débit;

- une seconde série de B lignes à retard (105,..., 107), chacune procurant un retard égal à $\frac{1}{K}$ fois la durée d'un bit d'une cellule, au débit initial; une sortie de cette seconde série constituant une sortie des moyens pour multiplier le débit;

- un jeu de B portes optiques (100,...,103), chaque porte étant couplée à une extrémité d'une ligne à retard de la première série et à une extrémité d'une ligne à retard de la seconde série;

- des moyens de commande (111) pour ouvrir simultanément toutes les portes optiques (100,...,103), périodiquement, chaque fois qu'un bloc de B bits est présent dans la première série de lignes à retard, afin de transférer ce bloc dans la seconde série de lignes à retard.

2. Multiplexeur selon la revendication 1, dans lequel chaque cellule est découpée en N blocs de B bits, caractérisé en ce que les moyens (121) pour concaténer comportent :

- un diffuseur (122) ayant une entrée recevant en série les N blocs à concaténer, pour chaque cellule, et ayant N sorties;

- un combineur (131) ayant N entrées, et ayant une sortie;

- N portes optiques (123, ...., 126);

- N lignes à retard (127,...,130) procurant N retards respectivement égaux à 0, D, 2D, 3D,..., N.D, où D est la différence de durée d'un bloc après la multiplication du débit, chaque sortie du diffuseur (122) étant reliée à une entrée du combineur (131) par l'une des portes optiques, en série avec l'une des lignes à retard;

- des moyens de commande (132) pour commander les portes optiques de façon à ouvrir successivement chaque porte pendant une durée égale à la durée initiale d'un bloc, et de façon à transmettre chaque bloc d'une cellule à une ligne à retard procurant un retard décroissant en fonction du rang de ce bloc dans cette cellule.

3. Multiplexeur selon la revendication 1, caractérisé en ce que les moyens (37, 38) pour multiplexer temporellement comportent :

- des moyens (89.1,...,89.16,90) pour multiplexer spectralement sur une seule fibre optique (119) les M suites de cellules reçues sur une pluralité de fibres d'entrées (34.1,..., 34.16), avant de les fournir aux moyens (120) pour multiplier le débit, M cellules reçues en synchronisme étant multiplexées par M longueurs d'onde différentes;

- des moyens (37, 38) pour démultiplexer spectralement des cellules restituées par les moyens (121) pour concaténer, et pour les multiplexer temporellement.

4. Multiplexeur selon la revendication 3, caractérisé en ce que les moyens (37, 38) pour démultiplexer spectralement et pour multiplexer temporellement comportent :

- un diffuseur (140) ayant une entrée recevant les cellules restituées par les moyens (121) pour concaténer; et ayant S sorties;

- un premier combineur (148) ayant S entrées et une sortie;

- S filtres (141,...,144) laissant passer chacun S longueurs d'onde de cellule;

- S lignes à retard (154, ..., 157) procurant S retards respectivement égaux à 0, Tc,..., S. Tc où Tc est la durée d'une cellule après le changement de débit, chaque sortie du diffuseur (140) étant reliée à une entrée du combineur 148 par l'un des filtres et l'une des lignes à retard;

- un deuxième diffuseur (149) ayant une entrée reliée à la sortie du premier combineur (148) et ayant M sorties;

- M filtres (150, ..., 153) laissant passer chacun S longueurs d'onde, et placés respectivement sur les M sorties du deuxième diffuseur (149) pour fournir M multiplex temporels (MC1, ..., MC4).

5. Multiplexeur selon la revendication 4, caractérisé en ce que les moyens (37, 38) pour démultiplexer spectralement et multiplexer temporellement comportent en outre :

- M convertisseurs de longueur d'onde (160, ..., 163) recevant les M multiplex temporels (MC1, ..., MC4);
- un deuxième combineur (164) ayant M entrées reliées à des sorties des M convertisseurs de longueur d'onde et ayant une sortie (165) fournissant un multiplex temporel unique.

6. Démultiplexeur temporel photonique, pour démultiplexer temporellement des données binaires reçues sur P multiplex temporels sous la forme de P suites de cellules, chaque cellule ayant un nombre de bits fixé, caractérisé en ce qu'il comporte :

- des moyens (40, 222) pour démultiplexer temporellement les cellules reçues sur les P multiplex temporels, et pour les multiplexer spectralement sur un multiplex spectral unique (41);
- des moyens (220) pour découper chaque cellule dudit multiplex spectral unique (41) en blocs de B bits, B étant un nombre fixé, inférieur au nombre de bits d'une cellule, et pour séparer deux blocs consécutifs par un intervalle libre, de durée égale à (K-1) fois la durée d'un bloc de B bits au débit initial, K étant un nombre supérieur à 1;
- des moyens (221) pour diviser par K le débit d'un bloc de B bits, chaque cellule étant traitée comme une suite de blocs de B bits;
- et des moyens (222) pour démultiplexer spectralement les cellules restituées par les moyens (221) pour diviser par K le débit.

7. Démultiplexeur selon la revendication 6, caractérisé en ce que les moyens (221) pour diviser par K le débit d'un bloc de B bits, comportent :

- une première série de B lignes à retard (233, ..., 234) chacune procurant un retard égal à la durée d'un bit d'une cellule au débit initial; une entrée de cette première série recevant une suite de blocs de bits dont le débit est à diviser par K;
- une seconde série de B lignes à retard (239,..., 240) chacune procurant un retard égal à K fois la durée d'un bit d'une cellule au débit initial; une sortie de cette seconde série fournissant une suite de cellules dont le débit a été divisé par K;
- un jeu de B portes optiques (235,...,238), chaque porte étant couplée à une extrémité d'une ligne à retard de la première série et à une extrémité d'une ligne à retard de la seconde série;
- des moyens de commande (244) pour ouvrir simultanément toutes les portes optiques (235,...,238), périodiquement, chaque fois qu'un bloc de B bits est présent dans la première série de lignes à retard, afin de transférer ce bloc dans la seconde série de ligne à retard.

8. Démultiplexeur selon la revendication 6, dans lequel chaque cellule est découpée en N blocs de B bits, caractérisé en ce que les moyens (271) pour découper chaque cellule et séparer deux blocs consécutifs par un intervalle libre, comportant :

- un diffuseur (270) ayant une entrée recevant une suite de cellules à découper, et ayant N sorties;
- un combineur (280) ayant N entrées, et ayant une sortie fournissant une suite de blocs séparés;
- N portes optiques (271,...,274);
- N lignes à retard (275,...,278) procurant N retards respectivement égaux à O, D, 2D, 3D,..., N.D, où D est la différence de durée d'un bloc après la division du débit, chaque sortie du diffuseur (270) étant reliée à une entrée du combineur (280) par l'une des portes optiques, en série avec l'une des lignes à retard;
- des moyens de commande (279) pour commander les portes optiques (271,...,274) de façon à ouvrir successivement chaque porte pendant une durée égale à la durée initiale d'un bloc, et de façon à transmettre chaque bloc, d'une cellule, à une ligne à retard procurant un retard décroissant en fonction du rang de ce bloc dans cette cellule.

9. Démultiplexeur selon la revendication 6, caractérisé en ce que les moyens (40, 222) pour démultiplexer temporellement comportent :

- des moyens (245 à 249) pour multiplexer spectralement sur une seule fibre optique (264) toutes les cellules reçues sur les P multiplex temporels (MC1,...,MC4);
- des moyens (250 à 263) pour rendre synchrones les cellules multiplexées spectralement sur ladite fibre unique (264), avant de les fournir aux moyens (270) pour diviser le débit;
- des moyens (222) pour démultiplexer spectralement les cellules restituées par les moyens (270) pour diviser le débit.

10. Démultiplexeur selon la revendication 9, caractérisé en ce que les moyens pour multiplexer spectralement sur une seule fibre, comportant :

- P convertisseurs de longueur d'onde (245,..., 248) recevant chacun l'un des P multiplex temporels (MC1,...,MC4);
- un premier combineur (249) ayant P entrées reliées respectivement à des sorties des convertisseurs, et ayant une sortie fournissant des cellules multiplexées spectralement sur une fibre optique unique (264), avec S longueurs d'onde différentes;

et en ce que les moyens pour rendre synchrones les cellules, comportent :

- un diffuseur (250) ayant une entrée reliée à la sortie du premier combineur (249) et ayant Q sorties;
- un deuxième combineur (262) ayant Q entrées, et ayant une sortie fournissant des cellules multiplexées spectralement par S longueurs d'onde sur une fibre optique unique (41), et synchrones entre elles;
- Q portes optiques (251, ...,254);
- Q lignes à retard (255,...,258) procurant respectivment des retards égaux à 0, Tc, 2Tc,...Q. Tc, où Tc est la durée d'une cellule avant la division de débit; chaque sortie du diffuseur (250) étant reliée à une entrée du deuxième combineur (262) par l'une des portes optiques en série avec l'une des lignes à retard;
- des moyens (263) pour commander les convertisseurs (245,...,248) et les portes (251,...,254), de façon à attribuer S longueur d'onde différentes à Q cellules successives sur chacun des P multiplex; et de façon à retarder chacune de ces Q cellules d'un retard décroissant avec le rang de cette cellule.

**Patentansprüche**

1. Lichtsignal-Zeitmultiplexer zur zeitlichen Multiplexierung von binären Daten, die in Form von M Folgen synchroner Zellen empfangen werden und spektral multiplexiert sind, wobei jede Zelle eine feste Anzahl von Bits besitzt und die Zellen jeder Folge durch Leerintervalle voneinander getrennt sind, dadurch gekennzeichnet, daß er aufweist:

- Mittel (120), die für die M Folgen gemeinsam vorhanden sind, um den ursprünglichen Durchsatz eines Blocks von B Bits einer Zelle um einen Faktor K > 1 zu vervielfachen, wobei B eine feste Zahl größer als 1 und kleiner als die Anzahl der Bits einer Zelle ist und wobei jede Zelle in eine Folge von Blöcken mit je B Bits zerlegt wird,
- Mittel (121), die für die M Folgen gemeinsam vorhanden sind, um die jede Zelle bildenden Blöcke zu verketten, wobei diese Mittel hinter den Mitteln (120) zur Vervielfachung des Durchsatzes jedes Blocks angeordnet sind,
- Mittel (37, 38), um von den Verkettungsmitteln ausgegebene Zellen zeitlich zu multiplexieren, und dadurch daß die Mittel (120) zur Vervielfachung des Durchsatzes eines Blocks von B Bits um den Faktor K aufweisen:

- eine erste Serie von B Verzögerungsleitungen (95, .. 97), die je eine Verzögerung um die Dauer eines Bits einer Zelle beim ursprünglichen Durchsatz bewirken, wobei ein Eingang dieser ersten Serie einen Eingang der Mittel zur Vervielfachung des Durchsatzes bildet,
- eine zweite Serie von B Verzögerungsleitungen (105, .. 107), die je eine Verzögerung von (1/K)-mal der Dauer eines Bits einer Zelle gemäß dem ursprünglichen Durchsatz bewirken, wobei ein Ausgang dieser zweiten Serie einen Ausgang der Mittel zur Vervielfachung des Durchsatzes bildet,
- einen Satz von B optischen Toren (100, ... 103), die je an ein Ende einer Verzögerungsleitung der ersten Serie und an ein Ende einer Verzögerungsleitung der zweiten Serie gekoppelt sind,
- Steuermittel (111), um gleichzeitig alle optischen Tore (100, ... 103) periodisch immer dann zu öffnen, wenn ein Block von B Bits in der ersten Serie von Verzögerungsleitungen vorliegt, um diesen Block in die zweite Serie von Verzögerungsleitungen zu übertragen.

2. Multiplexer nach Anspruch 1, in dem jede Zelle in N Blöcke von je B Bits zerlegt wird, dadurch gekennzeichnet, daß die Verkettungsmittel (121) aufweisen:

- einen Verteiler (122) mit einem Eingang, an dem in Reihe die N für jede Zelle zu verkettenden Blöcke vorliegen, und mit N Ausgängen,
- ein Kombinierglied (131) mit N Eingängen und einem Ausgang,
- N optische Tore (123, ... 126),
- N Verzögerungsleitungen (127, ... 130), die N Verzögerungen einer Dauer von 0, D, 2D, 3D, ... ND bewirken, wobei D die Differenz zwischen der Dauer eines Blocks vor und nach der Vervielfachung des Durchsatzes bedeutet und wobei jeder Ausgang des Verteilers (122) an einen Eingang des Kombinierglieds (131) über eines der optischen Tore in Reihe mit einer der Verzögerungsleitungen angeschlossen ist,
- Steuermittel (132), um die optischen Tore nacheinander während einer Dauer gleich der ursprünglichen Dauer eines Blocks zu öffnen und so jeden Block einer Zelle in eine Verzögerungsleitung zu übertragen, die eine abhängig vom Rang dieses Blocks in dieser Zelle abnehmende Verzögerung bewirkt.

3. Multiplexer nach Anspruch 1, dadurch gekennzeichnet, daß die Mittel (37, 38) zur zeitlichen Multiplexierung aufweisen:

- Mittel (89.1 ... 89.16, 90) zur spektralen Multiplexierung der M Folgen von auf einer Mehrzahl von Eingangsfasern (34.1 ... 34.16) empfangenen Zellen auf eine gemeinsame Lichtleitfaser (119), ehe sie an die Mittel (120) zur Vervielfachung des Durchsatzes geliefert werden, wobei M synchron empfangene Zellen mittels M unterschiedlichen Wellenlängen multiplexiert werden,
- Mittel (37, 38) zur spektralen Demultiplexierung der von den Verkettungsmitteln (21) ausgegebenen Zellen und zu deren zeitlicher Multiplexierung.

4. Multiplexer nach Anspruch 3, dadurch gekennzeichnet, daß die Mittel (37, 38) zur spektralen Demultiplexierung und zur zeitlichen Multiplexierung aufweisen:

- einen Verteiler (140) mit einem Eingang, an dem die von den Verkettungsmitteln (21) ausgegebenen Zellen empfangen werden, und mit S Ausgängen,
- ein erstes Kombinierglied (148) mit S Eingängen und einem Ausgang,
- S Filter (141, .. 144), die je S Wellenlängen von Zellen durchlassen,
- S Verzögerungsleitungen (154, .. 157), die S Verzögerungen des Werts 0, Tc, ... STc bewirken, wobei Tc die Dauer einer Zelle nach der Veränderung des Durchsatzes darstellt und jeder Ausgang des Verteilers (140) an einen Eingang des Kombinierglieds (148) über eines der Filter und eine der Verzögerungsleitungen angeschlossen ist,
- einen zweiten Verteiler (149) mit einem Eingang, der an den Ausgang des ersten Kombinierglieds (148) angeschlossen ist, und mit M Ausgängen,
- M Filter (150, .. 153), die je S Wellenlängen durchlassen und je an einem der M Ausgänge des zweiten Verteilers (149) liegen, um M Zeitmultiplexsysteme (MC1, ... MC4) zu liefern.

5. Multiplexer nach Anspruch 4, dadurch gekennzeichnet, daß die Mittel (37, 38) zur spektralen Demultiplexierung und zur zeitlichen Multiplexierung außerdem aufweisen:

- M Wellenlängenwandler (160, ... 163), denen die M Zeitmultiplexsysteme (MC1, ... MC4) zugeführt werden,
- ein zweites Kombinierglied (164) mit M Eingängen, die an Ausgänge der M Wellenlängenwandler angeschlossen sind, und mit einem Ausgang (165), der ein gemeinsames Zeitmultiplexsystem liefert.

6. Zeitlicher Demultiplexer für Lichtsignale zur zeitlichen Demultiplexierung der auf P Zeitmultiplexleitungen in Form von P Folgen von Zellen empfangenen Binärdaten, wobei jede Zelle eine feste Anzahl von Bits aufweist, dadurch gekennzeichnet, daß er aufweist:

- Mittel (40, 222), um die auf den P Zeitmultiplexsystemen empfangenen Zellen zeitlich zu demultiplexieren und spektral in einem gemeinsamen Spektralmultiplexsystem (41) zu multiplexieren,
- Mittel (220), um jede Zelle des gemeinsamen spektralen Multiplexsystems (41) in Blöcke von B Bits zu zerlegen, wobei B eine feste Zahl kleiner als die Zahl der Bits einer Zelle ist, und um zwei aufeinanderfolgende Blöcke durch ein Leerintervall einer Dauer gleich K-1 mal der Dauer eines Blocks von B Bits im ursprünglichen Durchsatz voneinander zu trennen, wobei K eine ganze Zahl größer als eins ist,
- Mittel (221), um den Durchsatz eines Blocks von B Bits durch K zu teilen, wobei jede Zelle als eine Folge von Blöcken mit B Bits behandelt wird,
- und Mittel (222), um die von den Mitteln (221) ausgegebenen Zellen spektral zu demultiplexieren, um den Durchsatz durch K zu teilen.

7. Demultiplexer nach Anspruch 6, dadurch gekennzeichnet, daß die Mittel (221) zum Teilen des Durchsatzes eines Blocks von B Bits durch K aufweisen:

- eine erste Serie von B Verzögerungsleitungen (233 ... 234), die je eine Verzögerung gleich der Dauer eines Bits einer Zelle beim ursprünglichen Durchsatz bewirken, wobei ein Eingang dieser ersten Serie eine Folge von Blöcken von Bits empfängt, deren Durchsatz durch K geteilt werden soll,
- eine zweite Serie von B Verzögerungsleitungen (239 ... 240), die je eine Verzögerung von K mal der Dauer eines Bits einer Zelle beim ursprünglichen Durchsatz bewirken, wobei ein Ausgang dieser zweiten Serie eine Folge von Zellen liefert, deren Durchsatz durch K geteilt wurde,
- einen Satz von B optischen Toren (235 ... 238), die je an ein Ende einer Verzögerungsleitung der ersten Serie und an ein Ende einer Verzögerungsleitung der zweiten Serie gekoppelt sind,
- Steuermittel (244), um gleichzeitig alle optischen Tore (235, ... 238) periodisch immer dann zu öffnen, wenn ein Block von B Bits in der ersten Serie von Verzögerungsleitungen vorliegt, um diesen Block in die zweite Serie von Verzögerungsleitungen zu übertragen.

8. Demultiplexer nach Anspruch 6, in dem jede Zelle in N Blöcke von B Bits zerlegt ist, dadurch gekennzeichnet, daß die Mittel (220) zum Zerlegen jeder Zelle und zur Trennung zweier aufeinanderfolgender Blöcke mittels eines Leerintervalls aufweisen:

- einen Verteiler (270) mit einem Eingang, der eine Folge von zu zerlegenden Zellen empfängt, und mit N Ausgängen,
- ein Kombinierglied (280) mit N Eingängen und einem Ausgang, der eine Folge von getrennten Blöcken liefert,
- N optische Tore (271, .. 274),
- N Verzögerungsleitungen (275, .. 278), die N Verzögerungen eines Werts 0, D, 2D, 3D, ... ND bewirken, wobei D der Unterschied in der Dauer eines Blocks vor und nach der Verringerung des Durchsatzes ist und wobei jeder Ausgang des Verteilers (270) an einen Eingang des Kombinierglieds (280) über eines der optischen Tore in Reihe mit einer der Verzögerungsleitungen verbunden ist,
- Steuermittel (279), um die optischen Tore (271, .. 274) so zu steuern, daß nacheinander jedes Tor während einer Dauer gleich der ursprünglichen Dauer eines Blocks geöffnet wird, so daß jeder Block einer Zelle in eine Verzögerungsleitung übertragen wird, die eine abhängig vom Rang dieses Blocks in dieser Zelle abnehmende Verzögerung bewirkt.

9. Demultiplexer nach Anspruch 6, dadurch gekennzeichnet, daß die Mittel (40, 220) zur zeitlichen Demultiplexierung aufweisen:

- Mittel (245 bis 249), um auf einer gemeinsamen Lichtleitfaser (264) alle auf den P Zeitmultiplexsystemen (MC1, .. MC4) empfangenen Zellen spektral zu multiplexieren,
- Mittel (250 bis 263), um die spektral in der gemeinsamen Faser (264) multiplexierten Zellen synchron zu machen, ehe sie an die Mittel (270) zur Verringerung des Durchsatzes geliefert werden,
- und Mittel (222), um die von den Mitteln (270) zur Herabsetzung des Durchsatzes ausgegebenen Zellen spektral zu demultiplexieren.

10. Demultiplexer nach Anspruch 9, dadurch gekennzeichnet, daß die Mittel zur spektralen Multiplexierung auf einer gemeinsamen Faser aufweisen:

- P Wellenlängenwandler (245 ... 248), die je eines der P Zeitmultiplexsysteme (MC1, .. MC4) empfangen,
- ein erstes Kombinierglied (249) mit P Eingängen, die an je einen der Ausgänge der Wandler angeschlossen sind, und mit einem Ausgang, der spektral multiplexierte Zellen auf einer gemeinsamen Lichtleitfaser (264) mit S unterschiedlichen Wellenlängen ausgibt, und daß die Mittel, um die Zellen synchron zu machen, aufweisen:

- einen Verteiler (250) mit einem Eingang, der an den Ausgang des ersten Kombinierglieds (249) angeschlossen ist, und mit Q Ausgängen,
- ein zweites Kombinierglied (262) mit Q Eingängen und einem Ausgang, der spektral mittels S Wellenlängen multiplexierte Zellen auf einer gemeinsamen Lichtleitfaser (41) liefert, wobei diese Zellen untereinander synchron sind,
- Q optische Tore (251 ... 254),
- Q Verzögerungsleitungen (255 ... 258), die Verzögerungen des Werts 0, Tc, 2Tc, ... QTc bewirken, wobei Tc die Dauer einer Zelle vor der Herabsetzung des Durchsatzes ist und jeder Ausgang des Verteilers (250) an einen Eingang des zweiten Kombinierglieds (262) über eines der optischen Tore in Reihe mit einer der Verzögerungsleitungen angeschlossen ist,
- Mittel (263), um die Wellenlängenwandler (245 ... 248) und die Tore (251 ... 254) so zu steuern, daß S unterschiedliche Wellenlängen den Q aufeinanderfolgenden Zellen auf jedem der P Multiplexsysteme zugewiesen werden und daß jede dieser Q Zellen um eine Verzögerungsdauer verzögert wird, die mit dem Rang dieser Zelle abnimmt.

**Claims**

1. Photonic time-division multiplexer for time-division multiplexing binary data received in the form of M series of spectrally multiplexed synchronous cells each of which has a fixed number of bits, the cells in each series being separated by gaps,
    characterised in that it comprises:

- means (120) common to the M series for multiplying by a number K greater than one the initial bit rate of a block of B bits of a cell where B is a fixed number greater than one and less than the number of bits in a cell and each cell is divided into a series of blocks of B bits;
- means (121) common to the M series for concatenating the blocks constituting each cell on the output side of the means (120) for multiplying the bit rate of each block;
- means (37, 38) for time-division multiplexing cells reconstituted by the concatenation means;
    and in that the means (120) for multiplying by K the bit rate of a block of B bits comprise:
- a first series of B delay lines (95 ..., 97) each introducing a time-delay equal to the duration of one bit of a cell at the original bit rate, one input of said first series constituting an input of the bit rate multiplier means;

- a second series of B delay lines (105, ..., 107) each introducing a time-delay equal to 1/K times the duration of one bit of the cell at the original bit rate, one output of said second series constituting an output of the bit rate multiplier means;

- a set of B optical gates (100, ..., 103) each coupled to one end of a delay line of the first series and to one end of a delay line of the second series; and

- control means (111) for simultaneously opening all said optical gates (100, ..., 103) periodically whenever a block of B bits is present in the first series of delay lines in order to transfer said block into the second series of delay lines.

2. Multiplexer according to claim 1 wherein each cell is divided into N blocks of B bits, characterised in that the concatenation means (121) comprise:

- a splitter (122) having an input receiving in series the N blocks to be concatenated for each cell and N outputs;

- a combiner (131) having N inputs and one output;

- N optical gates (123, .., 126);

- N delay lines (127, ..., 130) introducing N time-delays respectively equal to 0, D, 2.D, 3.D N.D where D is the duration difference of a block after multiplication of the bit rate, each output of the splitter (122) being connected to an input of the combiner (131) by one of the optical gates in series with one of the delay lines; and

- control means (132) for controlling the optical gates so as to open each gate in succession for a duration equal to the original duration of a block and so as to pass each block of a cell to a delay line introducing a time-delay decreasing in proportion to the rank of said block in said cell.

3. Multiplexer according to claim 1 characterised in that the time-division multiplexing means (37, 38) comprise:

- means (89.1, ..., 89.16, 90) for spectrally multiplexing onto a single optical fibre (119) the M series of cells received on a plurality of input fibres (34.1, ..., 34.16) before supplying them to the bit rate multiplier means (120), M cells received synchronously being multiplexed with M different wavelengths; and

- means (37, 38) for spectrally demultiplexing and for time-division multiplexing the cells reconstituted by the concatenation means (121).

4. Multiplexer according to claim 3 characterised in that the spectral demultiplexing and time-division multiplexing means (37, 38) comprise:

- a splitter (140) having an input receiving the cells reconstituted by the concatenation means (121) and S outputs;

- a first combiner (148) having S inputs and an output;

- S filters (141, ..., 144) each passing S cell wavelengths;

- S delay lines (154, ..., 157) introducing S time-delays respectively equal to 0, Tc ..., S.Tc, where Tc is the duration of a cell after conversion of the bit rate, each output of the splitter (140) being connected to an input of the combiner 148 by one of the filters and one of the delay lines;

- a second splitter (149) having an input connected to the output of the first combiner (148) and M outputs; and

- M filters (150, ..., 153) each passing S wavelengths and connected to the respective M outputs of the second splitter (149) to supply M time-division multiplexes (MC1, MC4).

5. Multiplexer according to claim 4 characterised in that the spectral demultiplexing and time-division multiplexing means (37, 38) further comprise:

- M wavelength converters (160, ..., 163) receiving the M time-division multiplexes (MC1, ..., MC4); and

- a second combiner (164) having M inputs connected to outputs of the M wavelength converters and an output (165) supplying a single time-division multiplex.

6. Photonic time-division demultiplexer for time-division multiplexing binary data received on P time-division multiplexes in the form of P series of cells each having a fixed number of bits, characterised in that it comprises:

- means (40, 222) for time-division multiplexing the cells received on the P time-division multiplexes and for spectrally multiplexing them onto a single spectral multiplex (41);

- means (220) for dividing each cell of said single spectral multiplex (41) into blocks of B bits where B is a fixed number less than the number of bits in a cell and for separating two consecutive blocks by a gap whose duration is equal to (K - 1) times the duration of a block of B bits at the original bit rate where K is a number greater than 1;

- means (221) for dividing by K the bit rate of a block of B bits, each cell being processed as a series of blocks of B bits; and

- means (222) for spectrally demultiplexing the cells reconstituted by the means (221) for dividing the bit rate by K.

7. Demultiplexer according to claim 6 characterised in that the means (221) for dividing by K the bit rate of a block of B bits comprise:

- a first series of B delay lines (233, ..., 234) each introducing a time-delay equal to the duration of a bit of a cell at the original bit rate, one input of said first series receiving a series of blocks of bits whose bit rate is to be divided by K;
- a second series of B delay lines (239, ..., 240) each introducing a time-delay equal to K times the duration of a bit of a cell at the original bit rate, one output of said second series supplying a series of cells whose bit rate has been divided by K;
- a set of B optical gates (235, ..., 238) each connected to one end of a delay line of the first series and to one end of a delay line of the second series; and
- control means (244) for simultaneously opening all of the optical gates (235, ..., 238) periodically whenever a block of B bits is present in the first series of delay lines in order to transfer said block into the second series of delay lines.

8. Demultiplexer according to claim 6 wherein each cell is divided into N blocks of B bits and characterised in that the means (271) for dividing each cell and separating two consecutive blocks by a gap comprise:

- a splitter (270) having an input receiving a series of cells to be divided and N outputs;
- a combiner (280) having N inputs and one output supplying a series of separate blocks;
- N optical gates (271, ..., 274);
- N delay lines (275, ..., 278) introducing N time-delays respectively equal to 0, D, 2.D, 3.D, ..., N.D where D is the duration difference of a block after the bit rate is divided, each output of the splitter (270) being connected to an input of the combiner (280) by one of the optical gates in series with one of the delay lines; and
- control means (279) for controlling the optical gates (271, ..., 274) so as to open each gate in succession for a duration equal to the original duration of a block and so as to pass each block of a cell to a delay line introducing a time-delay decreasing in proportion to the rank of said block in said cell.

9. Demultiplexer according to claim 6 characterised in that the time-division demultiplexing means (40, 222) comprise:

- means (245 through 249) for spectrally multiplexing onto a single optical fibre (264) all the cells received on the P time-division multiplexes (MC1, ..., MC4);
- means (250 through 263) for synchronising the spectrally multiplexed cells on said single fibre (264) before supplying them to the means (270) for dividing the bit rate; and
- means (222) for spectrally demultiplexing the cells reconstituted by the means (270) for dividing the bit rate;

10. Demultiplexer according to claim 9 characterised in that the means for spectral multiplexing onto a single fibre comprise:

- P wavelength converters (245, ..., 248) each receiving one of the P time-division multiplexes (MC1, ..., MC4);
- a first combiner (249) having P inputs respectively connected to outputs of the converters and an output supplying cells spectrally multiplexed with S different wavelengths to a single optical fibre (264); and in that the cell synchronisation means comprise:
- a splitter (250) having an input connected to the output of the first combiner (249) and Q outputs;
- a second combiner (262) having Q inputs and an output supplying synchronised cells spectrally multiplexed by S wavelengths to a single optical fibre (41);
- Q optical gates (251, ..., 254);
- Q delay lines (255, ..., 258) introducing respective time-delays equal to 0, Tc, 2.Tc, ..., Q.Tc where Tc is the duration of a cell before the bit rate is divided, each output of the splitter (250) being connected to an input of the second combiner (262) by one of the optical gates in series with one of the delay lines; and
- means (263) for controlling the converters (245, ..., 248) and the gates (251, ..., 254) so as to assign S different wavelengths to Q consecutive cells on each of the P multiplexes and so as to delay each of said Q cells by a time-delay decreasing in proportion to the rank of said cell.

# FIG.1

FIG.2

EP 0 497 668 B1

# FIG.3

FIG.4

# FIG.5

EP 0 497 668 B1